# EUROPÄISCHE PATENTSCHRIFT

(11) **EP 3 591 775 B1**
(45) Veröffentlichungstag und Bekanntmachung des Hinweises auf die Patenterteilung: **10.08.2022**
(21) Anmeldenummer: 19179075.7
(22) Anmeldetag: 07.06.2019
(51) Int. Cl.: H01T 13/54, H01T 21/02

(54) **VORKAMMERKAPPE MIT KONISCHEN DURCHSTRÖMUNGSÖFFNUNGEN FÜR EINE VORKAMMER-ZÜNDKERZE SOWIE EINE VORKAMMER-ZÜNDKERZE UND EINEM HERSTELLUNGSVERFAHREN DER VORKAMMERKAPPE**
PRE-CHAMBER CAP WITH CONICAL FLUID OPENINGS FOR A PRE-CHAMBER IGNITER PLUG AND A PRE-CHAMBER IGNITER PLUG AND A METHOD FOR PRODUCING THE PRE-CHAMBER CAP
CAPUCHON DE PRÉCHAMBRE POURVU D'OUVERTURES DE PASSAGE CONIQUES POUR UNE BOUGIE D'ALLUMAGE DE PRÉCHAMBRE AINSI QUE BOUGIE D'ALLUMAGE DE PRÉCHAMBRE ET PROCÉDÉ DE FABRICATION DE CAPUCHON DE PRÉCHAMBRE

(30) Priorität: 04.07.2018 DE 102018211009
(43) Veröffentlichungstag der Anmeldung: 08.01.2020
(73) Patentinhaber: Robert Bosch GmbH, 70442 Stuttgart (DE)
(72) Erfinder: Blankmeister, Matthias, 42579 Heiligenhaus (DE)

(56) Entgegenhaltungen:
- DE-A1-102011 076 471
- JP-A- 2006 177 248
- JP-A- 2010 096 089
- US-B2- 7 659 655

## Beschreibung

### Stand der Technik

Die Erfindung betrifft eine Vorkammerkappe für eine Vorkammer-Zündkerze gemäß des Anspruchs 1, sowie eine Vorkammer-Zündkerze mit dieser Vorkammerkappe gemäß Anspruch 7 und ein Verfahren zur Herstellung dieser Vorkammerkappe gemäß Anspruch 8. Insbesondere kann die erfindungsgemäße Vorkammerkappe bei Vorkammer-Zündkerzen für den Automotivbereich oder bei auch bei Vorkammer-Zündkerzen für den Industrie-Gasmotorenbereich verwendet werden.

Bisher erfolgt bei mobilen Fahrzeugen, wie z.B. PKW oder LKW, die Entflammung des Kraftstoffs, beispielsweise Benzin oder Gas, im Motor mit einer konventionellen Zündkerze, d.h. eine Zündkerze ohne eine Vorkammer. Es gibt konventionelle Zündkerzen mit unterschiedlichsten Ausgestaltungen der Masseelektrode, wie beispielsweise als Seitenelektrode oder als Dachelektrode. Bei konventionellen Zündkerzen findet die Entflammung des Kraftstoffes sehr lokal an einem Ort statt (lokale Zündung).

Eine Vorkammer-Zündkerze unterscheidet sich primär von einer konventionellen Zündkerze dadurch, dass die Vorkammer-Zündkerze an dem brennraumseitigen Gehäuseende eine Vorkammerkappe hat, wodurch eine Vorkammer ausgebildet wird, in der eine erste Entflammung des Kraftstoff-Luft-Gemisches an den Elektroden erfolgt. Die Flammen können durch Durchgangsöffnungen in der Vorkammerkappe in den Hauptbrennraum des Motors gelangen und entzünden dort ausgehend von mehreren Punkten das restliche Kraftstoff-Luft-Gemisch (zweite Entflammung). Durch diese zweite Entflammung gleichzeitig an mehreren Orten in der Hauptbrennkammer, auch Raum-Zündung genannt, können Vorkammer-Zündkerzen wesentlich schneller und effizienter das Kraftstoff-Luft-Gemisch verbrennen. Auch deshalb sind Vorkammer-Zündkerzen seit Jahren bei stationären Industrie-Gasmotoren im Serieneinsatz. Des Weiteren sind Vorkammer-Zündkerzen aufgrund der schnellen und effizienten Raumzündung im Vergleich zu konventionellen Zündkerzen auch in der Lage magere Kraftstoff-Luft-Gemische zu entflammen. Auch aufgrund des Vorteils bei der Entflammungsstabilität in der Volllast, werden im Bereich der Industrie-Gasmotoren bevorzugt Vorkammer-Zündkerzen eingesetzt. Das Raumzündungskonzept erlaubt einen stabileren Betrieb des Motors in Richtung des thermodynamischen Optimums in der Volllast.

Solche bei stationären Industrie-Gasmotoren benutzten Vorkammer-Zündkerzen sind beispielsweise aus der DE 38 21 688 und der DE 29 16 285 bekannt.

Bisher gibt es keine Vorkammer-Zündkerze, die eine gute Performance, d.h. zuverlässige Entflammung und gute Entflammungsstabilität des Kraftstoff-Luft-Gemisches, auch bei unterschiedlichen Lastpunkten des Motors liefert. Das Lastprofil des Motors eines mobilen Fahrzeugs ist instationär und reicht von Leerlauf über Teillast bis hin zu Volllast. Für die Anwendung einer Vorkammer-Zündkerze im Automotivbereich, z.B. bei PKW oder LKW, ist es notwendig, dass die Vorkammer-Zündkerze nicht nur bei Volllast eine gute Performance, sondern auch bei anderen Lastpunkten hat. Bei niedriger Teillast, d.h. bei niedriger Last und niedriger Drehzahl, besteht die Schwierigkeit bei der Vorkammer-Zündkerze darin ein zündfähiges Kraftstoff-Luft-Gemisch in die Vorkammer zu bekommen. Bei höheren Lastpunkten, d.h. höhere Last und höhere Drehzahl, besteht die Herausforderung die Temperatur der Bauteile in der Vorkammer-Zündkerze so niedrig wie möglich zu halten, damit eine Vorentflammung des Kraftstoff-Luft-Gemisches verhindert wird. Die Dokumente DE 10 2011 076471 A1, JP 2006 177248 A und JP 2010 096089 A offenbaren alle eine Vorkammerkappe gemäß dem Oberbegriff des Anspruchs 1.

Somit liegt der vorliegenden Erfindung die Aufgabe zugrunde eine Vorkammerkappe für eine Vorkammer-Zündkerze derart zu verbessern, dass eine Vorkammer-Zündkerze mit der erfindungsgemäßen Vorkammerkappe auch bei verschiedenen Lastpunkten eine gute Entflammung und eine gute Entflammungsstabilität des Kraftstoff-Luft-Gemisches aufweist.

### Vorteil der Erfindung/ Offenbarung der Erfindung

Die Aufgabe wird durch eine Vorkammerkappe gemäß dem unabhängigen Anspruch 1 gelöst.

Die erfindungsgemäße Vorkammerkappe für eine Vorkammer-Zündkerze weist eine Wand mit einer Innenseite und einer Außenseite auf, wobei die Wand der Vorkammerkappe mindestens eine Durchgangsöffnung aufweist, die sich von der Innenseite der Wand bis zur Außenseite der Wand erstreckt. Die mindestens eine Durchgangsöffnung ist dazu eingerichtet, dass ein Kraftstoff-Gemisch in eine Vorkammer einströmen und eine Flamme aus der Vorkammer ausströmen kann, wenn die Vorkammerkappe zusammen mit einer Zündkerze in einem Motor verwendet wird. Die Wand der Vorkammerkappe bildet einen Teil der Begrenzung der Vorkammer, wenn die Vorkammerkappe auf eine Zündkerze aufgesteckt ist und dadurch eine Vorkammer-Zündkerze sich ausbildet. Der andere Teil der Begrenzung der Vorkammer wird typischerweise durch ein Gehäuse und einen Isolator der Vorkammer-Zündkerze gebildet.

Durch die erfindungsgemäße Verwendung von einer oder mehreren Durchgangsöffnungen mit einem Durchmesser d, der einen konischen Verlauf hat, ergibt sich, dass ein Medium, ein Kraftstoff-Luft-Gemisch oder eine Flamme, das die Durchgangsöffnung von dessen Ende mit dem großen Durchmesser d2 in Richtung des Endes mit dem kleineren Durchmesser d1 passiert, beim Durchströmen aufgrund der Verengung des Durchmessers beschleunigt wird. Dadurch hat das Medium eine höhere Geschwindigkeit am Austrittsende der Durchgangsöffnung mit konischen Durchmesser als bei einer Durchgangsöffnung mit konstantem Durchmesser.

Erfindungsgemäß weist die Durchgangsöffnung einen kleinen Durchmesser d1 an der Außenseite der Vorkammerkappenwand und einen großen Durchmesser d2 an der Innenseite der Vorkammerkappenwand haben, d.h. die Durchgangsöffnung hat eine Verengung nach außen hin. Bei diesem Beispiel wird bei der Verwendung der Vorkammerkappe zusammen mit einer Zündkerze in einem Motor eine Flamme, die bei einer Zündung in der Vorkammer entsteht, beim durchströmen der Durchgangsöffnung beschleunigt und hat eine höhere Geschwindigkeit und eine größere Reichweite außerhalb der Vorkammerkappe bzw. außerhalb einer Vorkammer-Zündkerze mit dieser Vorkammerkappe. Bei der Verwendung einer Vorkammer-Zündkerze mit dieser erfindungsgemäßen Vorkammerkappe in einem Motor, bedeutet dies, dass die Flamme eine größere Reichweite, auch längere Eindringtiefe genannt, hat und die Verbrennung im Hauptbrennraum schneller und vollständiger abläuft.

Dadurch wiederum kann der Verbrauch, die Effizienz und die Schadstoffemission für den Motor verbessert werden.

Weitere vorteilhafte Ausgestaltungen der Erfindung sind Gegenstand der Unteransprüche.

Erfindungsgemäß weist die Vorkammerkappe mindestens zwei Durchgangsöffnungen auf, deren Durchmesser d einen konischen Verlauf haben, wobei in einer vorteilhaften Ausgestaltung insbesondere die mindestens zwei Durchgangsöffnungen symmetrisch in Bezug auf eine Längsachse X-X der Vorkammerkappe angeordnet sind. Unter Vernachlässigung von Durchgangsöffnungen ist die Vorkammerkappe rotationssymmetrisch. Die Längsachse X-X der Vorkammerkappe ist die Rotationsachse. Des Weiteren fällt typischerweise die Längsachse X-X der Vorkammerkappe mit der Längsachse einer Zündkerze zusammen, wenn die erfindungsgemäße Vorkammerkappe an einer Zündkerze angeordnet ist.

Es hat sich als vorteilhaft herausgestellt bei mehreren Durchgangsöffnungen, diese in Bezug auf die Längsachse X-X der Vorkammerkappe gleichmäßig und insbesondere symmetrisch zu verteilen, damit innerhalb der Vorkammerkappe eine möglichst gleichmäßige Strömung erzeugt wird. Des Weiteren hat eine gleichmäßige und symmetrische Verteilung der Durchgangsöffnungen in der Vorkammerkappe auch den weiteren Vorteil, dass die aus der Vorkammerkappe austretenden Flammen in einer Hauptbrennraum eines Motors gleichmäßig und symmetrisch verteilt sind und somit die zweite Zündung in dem Hauptbrennraum besonders gleichmäßig im Hauptbrennraum erfolgt, wodurch wiederum eine besonders effiziente und schnelle Verbrennung des Kraftstoff-Luft-Gemisches im Hauptbrennraum möglich ist. Beispielsweise sind die Durchgangsöffnungen in einem oder mehreren Kreisen, deren Mittelpunkt die Längsachse X-X der Vorkammerkappe ist, bei der Vorkammerkappe angeordnet.

Bei einer weiteren vorteilhaften Ausführung weist die Vorkammerkappe maximal 9 Durchgangsöffnungen auf, die jeweils einen Durchmesser d mit einem konischen Verlauf haben. Die Größe der Vorkammerkappe ist begrenzt und somit ist auch die Oberfläche der Vorkammerkappe begrenzt, wodurch auch die Anzahl der Durchgangsöffnungen begrenzt ist. Untersuchungen der Anmelderin haben gezeigt, dass sich der vorher beschriebene Effekt nicht signifikant weiter erhöht, wenn die Anzahl der Durchgangsöffnungen über 9 erhöht wird. Bei weiterer Erhöhung der Anzahl der Durchgangsöffnungen ergibt sich sogar, dass die Vorkammerkappe ihre primäre Funktion als eine Vorkammer bildende Kappe immer schlechter erfüllen kann.

Es hat sich als vorteilhaft herausgestellt, dass bei einer ungeraden Anzahl von Durchgangsöffnungen eine Durchgangsöffnung entlang der Längsachse X-X der Vorkammerkappe in der Wand angeordnet ist und die restlichen Durchgangsöffnungen symmetrisch in Bezug auf die Längsachse X-X der Vorkammerkappe in der Wand angeordnet sind. Beispielsweise sind die restlichen Durchgangsöffnungen auf einen oder mehreren Kreisen um die Längsachse X-X herum angeordnet.

Bei einer weiterführenden Ausgestaltung der Vorkammerkappe ist vorgesehen, dass die Durchgangsöffnungen einen Durchmesser von mindestens 0,5 mm und maximal 2,0 mm haben. Insbesondere ist es vorteilhaft, wenn der minimale Durchmesser d1 und der maximale Durchmesser d2 einer Durchgangsöffnung innerhalb des Bereichs von 0,5 bis 2,0 mm liegen. Besonders vorteilhaft ist es, wenn mindestens einer der beide Durchmesser d1 und d2 im Bereich von 0,8 mm bis 1,4 mm liegt.

Es hat sich auch als vorteilhaft herausgestellt, wenn ein Winkel β zwischen einer Seite der Durchgangsöffnung und einer Längsachse Z-Z der Durchgangsöffnung mindestens 2° und maximal 8° beträgt. Durch die untere Grenze von 2° für den Winkel β wird sichergestellt, dass der Durchmesser der Durchgangsöffnung einen ausreichend großen konischen Verlauf hat, damit der Beschleunigungseffekt beim Durchgang des Fluides auch eintritt. Die obere Grenze von 8° für den Winkel β stellt sicher, dass der Ausgang der Durchgangsöffnung nicht zu eng wird.

Die Längsachse Z-Z der Durchgangsöffnungen schließt mit der Längsachse X-X der Vorkammerkappe den Winkel α ein. Vorzugsweise sind die Durchgangsöffnungen symmetrisch bezüglich der Längsachse X-X der Vorkammerkappe angeordnet. Es hat sich als vorteilhaft herausgestellt, wenn zwei Durchgangsöffnungen, die bezüglich der Längsachse X-X der Vorkammerkappe symmetrisch zu einander angeordnet sind, einen Winkel 2α von mindestens 60° und maximal 140° zwischen sich einschließen, wobei der Winkel 2α durch die Längsachsen Z-Z der jeweiligen Durchgangsöffnung begrenzt wird.

Die mindestens zwei Durchgangsöffnungen in der Wand können radial oder tangential in Bezug auf die Längsachse X-X der Vorkammerkappe angeordnet sein. Eine radiale Anordnung der Durchgangsöffnungen bedeutet, dass die Längsachse Z-Z der Durchgangsöffnung sich mit der Längsachse X-X der Vorkammerkappe im inneren der Vorkammerkappe schneidet. Mit anderen Worten die Längsachse Z-Z der Durchgangsöffnung ist radial zu einem Innenradius der Vorkammerkappe. Eine tangentiale Anordnung der Durchgangsöffnung bedeutet, dass die Längsachse Z-Z der Durchgangsöffnung sich mit der Längsachse X-X der Vorkammerkappe im inneren der Vorkammerkappe nicht schneidet. Mit anderen Worten die Längsachse Z-Z der Durchgangsöffnung ist gerade tangential zu dem Innenradius der Vorkammerkappe. Eine radiale Anordnung der Durchgangsöffnungen kann beim Einströmen des Kraftsoff-Luft-Gemisches eine starke Turbulenz erzeugen, die im späteren Verlauf bei der Entflammung die Verbrennung beschleunigt. Bei einer tangentialen Durchgangsöffnung hingegen wird die Strömung drallbehaftet in die Vorkammerkappe oder beim Austreten in den Hauptbrennraum geleitet. Je nach Art der Vorkammerzündkerze oder des Motors kann dies Vorteile haben.

Bei der erfindungsgemäßen Ausführung der Vorkammerkappe hat die Durchgangsöffnung auf der Außenseite der Vorkammerkappenwand einen kleineren Durchmesser d1 als auf der Innenseite der Vorkammerkappenwand, d.h. die Durchgangsöffnung hat auf der Innenseite der Vorkammerkappenwand den größeren Durchmesser d2. Mit anderen Worten der Durchgangsöffnung verengt sich nach außen hin. Dadurch wird es möglich bei der Verwendung der erfindungsgemäßen Vorkammerkappe zusammen mit einer Zündkerze in einem Motor, dass eine aus der Vorkammer strömende Flamme in einen Hauptbrennraum beschleunigt wird und somit eine größere Reichweite bzw. Eindringtiefe in den Hauptbrennraum hat. Dadurch wird erreicht, dass die Verbrennung schnell und vollständiger abläuft, wodurch wiederrum der Kraftstoffverbrauch, die Effizienz und die Schadstoffemission des Motors sich verbessert. Überraschenderweise wurde bei Berechnungen für diese Ausführung festgestellt, dass sich die nach außen verengende Durchgangsöffnung auch positiv auf die Einströmung des Kraftstoff-Luft-Gemisches auswirkt. Durch die nach innen sich vergrößernde Durchgangsöffnung wird eine Vorkammer, die sich durch eine gemeinsame Verwendung der Vorkammerkappe mit einer Zündkerze ausbildet, besser durchströmt. Dadurch wird das Restgas aus einer vorherigen Zündung besser ausgespült und für eine neue Zündung steht mehr zündfähiges Kraftstoff-Luft-Gemisch zu Verfügung, so dass die Vorkammer-Zündkerze eine gute Entflammbarkeit aufweist. Dieser Effekt konnte besonders stark bei Vorkammer-Zündkerzen mit einer erfindungsgemäßen Vorkammerkappe beobachtet werden, bei der die Durchgangsöffnungen sich nach außen hin verengen und radial in Bezug auf Längsachse X-X der Vorkammerkappe ausgerichtet sind.

Die Erfindung betrifft des Weiteren eine Vorkammer-Zündkerze, die eine Längsachse Y-Y, die sich vom brennraumseitigen Ende bis zum brennraumabgewandten Ende der Vorkammer-Zündkerze erstreckt, sowie ein Gehäuse mit einer Bohrung entlang der Längsachse Y-Y, ein innerhalb des Gehäuses angeordneten Isolator, eine innerhalb des Isolators angeordnete Mittelelektrode und mindestens eine Masseelektrode aufweist, wobei die mindestens eine Masseelektrode und die Mittelelektrode so angeordnet sind, dass ein Zündspalt sich ausbildet. Des Weiteren hat die Vorkammer-Zündkerze eine erfindungsgemäße Vorkammerkappe, die am brennraumseitigen Ende des Gehäuses am Gehäuse angeordnet ist, und die zusammen mit dem Gehäuse eine Vorkammer ausbildet. Insbesondere fallen die Längsachse X-X der Vorkammerkappe und die Längsachse Y-Y der Vorkammer-Zündkerze zusammen. Vorzugsweise ist die Vorkammer-Zündkerze eine Automotiv-Vorkammer-Zündkerze, d.h. die Vorkammer-Zündkerze ist für eine gute Performance bei unterschiedlichen Lastpunkten ausgelegt. Typischerweise hat eine Automotiv-Vorkammer-Zündkerze ein Gewindemaß von M8, M10, M12 oder M14. Alternative kann die Vorkammer-Zündkerze auch als Industrie-Vorkammer-Zündkerze eingesetzt werden. Industrie-Vorkammer-Zündkerzen haben typischerweise ein Gewindemaß von M14 oder M18.

Die Erfindung betrifft auch das Verfahren zur Herstellung der erfindungsgemäßen Vorkammerkappe, bei dem die mindestens zwei Durchgangsöffnungen mit dem konischen verlaufenden Durchmesser mittels Laserstrahl oder Erodieren gebohrt wird. Vorzugsweise wird der Laserstrahl oder eine zum Erodieren verwendete Elektrode so geführt, dass eine Seite der Durchgangsöffnung mit der Längsachse Z-Z der Durchgangsöffnung einen Winkel β von nicht weniger als 2° und nicht mehr als 8° einschließt.

### Zeichnung

Figur 1 zeigt ein Beispiel für eine erfindungsgemäße Vorkammerkappe mit radialen Durchgangsöffnungen
Figur 2 zeigt ein Beispiel für eine erfindungsgemäße Vorkammerkappe mit tangentialen Durchgangsöffnungen
Figur 3 zeigt ein Beispiel für eine Vorkammer-Zündkerze mit einer erfindungsgemäßen Vorkammer-Kappe

### Beschreibung des Ausführungsbeispiels

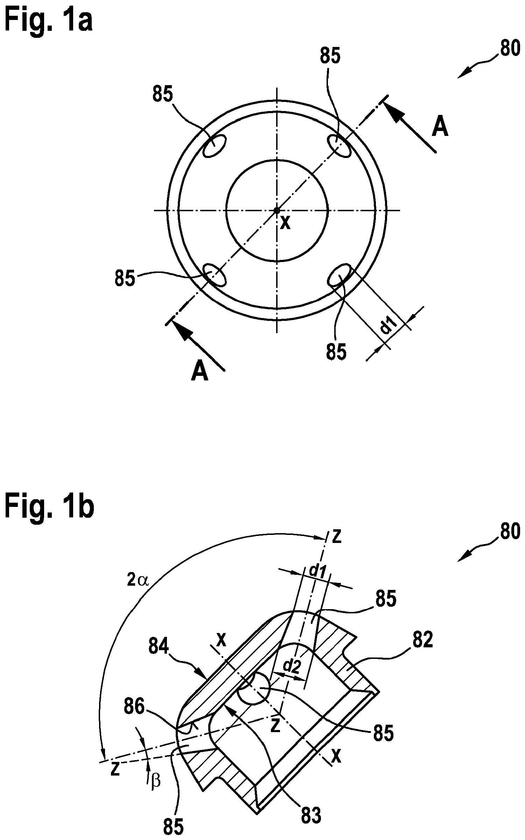

Figur 1 zeigt ein Beispiel für eine erfindungsgemäße Vorkammerkappe 80 mit radial angeordneten Durchgangsöffnungen 85. Dabei zeigt Figur 1 a) eine Draufsicht auf die Außenseite 84 der Vorkammerkappe 80. In der Mitte der Vorkammerkappe 80 ist die Längsachse X-X angedeutet. Die Vorkammerkappe 80 ist rotationssymmetrisch, wobei die Längsachse X-X die Rotationsachse ist. Die Durchgangsöffnungen 85 haben einen Durchmesser d1 an der Außenseite 83 der Vorkammerkappe. Des Weiteren sind die Durchgangsöffnungen 85 als Kreis symmetrisch um die Längsachse X-X herum angeordnet.

In Figur 1 b) ist die erfindungsgemäße Vorkammerkappe 80 im Schnitt A-A gezeigt, wobei in Figur 1 a) dargestellt ist wie die Schnittebene A-A gewählt wurde.

In Figur 1b) ist zu sehen, dass die Durchgangsöffnungen 85 außen den kleineren Durchmesser d1 und innen den größeren Durchmesser d2 haben. Die Durchgangsöffnungen 85 verengen sich nach außen hin. Jede Durchgangsöffnung 85 hat eine Längsachse Z-Z. Die Seiten 86 einer Durchgangsöffnung 85 bilden mit der Längsachs Z-Z der Durchgangsöffnung 85 einen Winkel β von 2° bis 8°. Die Durchgangsöffnungen 85 sind radial in der Wand 82 der Vorkammerkappe 80 angeordnet. Das bedeutet, dass die Längsachse Z-Z jeder Durchgangsöffnung 85 sich mit der Längsachse X-X der Vorkammerkappe 80 schneidet. Zwischen der Längsachse X-X der Vorkammerkappe 80 und der Längsachse Z-Z einer Durchgangsöffnung 85 wird der Winkel α eingeschlossen. Zwei symmetrisch zur Längsachse X-X angeordnete Durchgangsöffnungen 85 schließen mit ihren Längsachsen den Winkel 2α ein. In diesem Beispiel beträgt 2α = 110° für zwei zueinander gegenüberliegende Durchgangsöffnungen 85. Vorzugsweise liegt 2α im Bereich von 60° bis 140°.

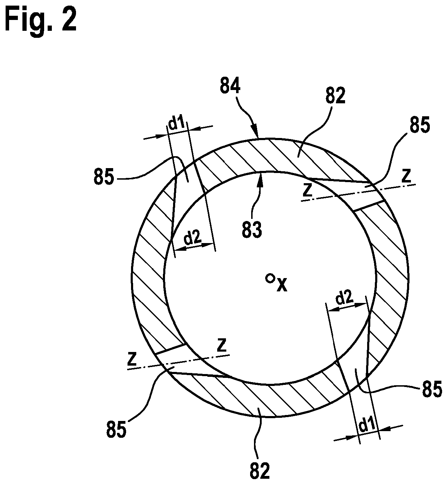

Figur 2 zeigt ein Beispiel für eine erfindungsgemäße Vorkammerkappe 80 mit tangential angeordneten Durchgangsöffnungen 85. Die Durchgangsöffnungen 85 sind tangential in der Wand 82 der Vorkammerkappe 80 angeordnet. Das bedeutet, dass die Längsachse Z-Z jeder Durchgangsöffnung 85 sich mit der Längsachse X-X der Vorkammerkappe 80 gerade nicht schneidet. Die Durchgangsöffnungen 85 verengen sich hier ebenfalls nach außen hin. Die Durchgangsöffnungen 85 haben außen den kleineren Durchmesser d1 und innen den größeren Durchmesser d2. Jede Durchgangsöffnung 85 hat eine Längsachse Z-Z. Die Seiten 86 einer Durchgangsöffnung 85 bilden mit der Längsachs Z-Z der Durchgangsöffnung 85 einen Winkel β von 2° bis 8°.

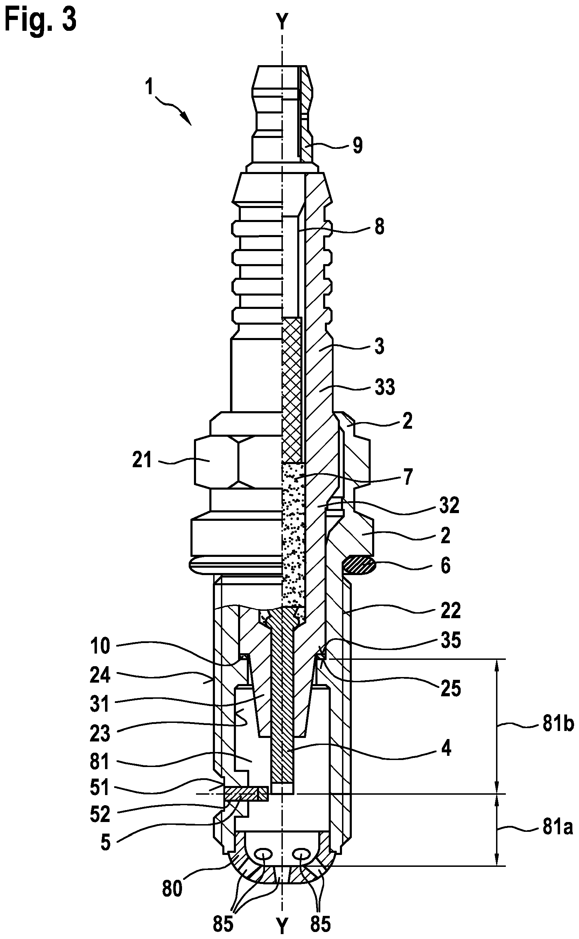

Figur 3 zeigt in einer halb geschnittenen Ansicht eine Vorkammer-Zündkerze 1. Die Vorkammer-Zündkerze 1 umfasst ein Gehäuse 2. In das Gehäuse 2 ist ein Isolator 3 eingesetzt. Das Gehäuse 2 und der Isolator 3 weisen jeweils entlang ihrer Längsachse eine Bohrung auf. Das Gehäuse hat eine Außenseite 24 und eine Innenseite 23. Die Längsachse des Gehäuses 2, die Längsachse des Isolators 3 und die Längsachse Y-Y der Vorkammer-Zündkerze 1 fallen zusammen. In den Isolator 3 ist eine Mittelelektrode 4 eingesetzt. Des Weiteren erstreckt sich in den Isolator 3 ein Anschlussbolzen 8 zur elektrische Kontaktierung der Zündkerze, über diese wird die Vorkammer-Zündkerze 1 mit einer nicht dargestellten Spannungsquelle elektrisch kontaktiert. Die elektrische Kontaktierung bildet das Brennraum-abgewandte Ende der Vorkammer-Zündkerze 1. Die elektrische Kontaktierung kann einstückig, wie in diesem Beispiel, oder auch aus mehreren Komponenten ausgebildet sein.

Der Isolator 3 wird typischerweise in drei Bereich unterteilt: Isolatorfuß 31, Isolatorkörper 32 und Isolatorkopf 33. Die drei Bereiche unterscheiden sich beispielsweise durch unterschiedliche Durchmesser. Der Isolatorfuß 31 ist das Brennraum-zugewandte Ende des Isolators 3. Innerhalb des Isolatorfußes 31 ist die Mittelelektrode 4 angeordnet. Der Isolatorfuß 31 ist hier vollständig innerhalb des Gehäuses 2 angeordnet. In der Regel hat der Isolatorfuß 31 den kleinsten Außendurchmesser am Isolator 3.

Angrenzend an den Isolatorfuß 31 ist der Isolatorkörper 32 angeordnet, der in der Regel vollständig vom Gehäuse 2 umfasst ist. Der Isolatorkörper 32 hat einen größeren Außendurchmesser als der Isolatorfuß 31. Der Übergang zwischen Isolatorfuß 31 und Isolatorkörper 32 ist typischerweise als Kehle ausgebildet. Dieser Übergang wird auch als Fußkehle oder Isolatorsitz 35 bezeichnet.

Der Isolatorkopf 33 grenzt am Brennraum-abgewandten Ende des Isolatorkörpers 32 an diesem an und bildet das Brennraum-abgewandte Ende des Isolators 3. Der Isolatorkopf 33 ragt aus dem Gehäuse 2 heraus. Der Außendurchmesser des Isolatorkopfs 33 liegt zwischen den Außendurchmessern von Isolatorfuß 31 und Isolatorkörper 32, wobei die Bereiche typischerweise über ihre Länge keinen konstanten Außendurchmesser haben, sondern der Außendurchmesser variieren kann.

Das Gehäuse 2 weist an seiner Innenseite einen Sitz 25 auf. Der Isolator 3 liegt mit seinem Isolatorsitz 35 auf dem Gehäuse-Sitz 25 auf. Zwischen dem Isolatorsitz 35 und dem Gehäuse-Sitz 25 ist eine Innendichtung 10 angeordnet.

Zwischen der Mittelelektrode 4 und dem Anschlussbolzen 8 zur elektrische Kontaktierung der Zündkerze befindet sich im Isolator 3 ein Widerstandselement 7, auch Panat genannt. Das Widerstandselement 7 verbindet die Mittelelektrode 4 elektrisch leitend mit dem Anschlussbolzen 8. Das Widerstandselement 7 ist beispielsweise als Schichtsystem aus einem ersten Kontaktpanat, einem Widerstandspanat und einem zweiten Kontaktpanat aufgebaut. Die Schichten des Widerstandselements unterscheiden sich durch ihre Materialzusammensetzung und dem daraus resultierenden elektrischen Widerstand. Das erste Kontaktpanat und das zweite Kontaktpanat können einen unterschiedlichen oder einen gleichen elektrischen Widerstand aufweisen.

An der Innenseite 23 des Gehäuses 2 ist mindestens eine Masseelektrode 5 in einer Bohrung 52 angeordnet, so dass die mindestens eine Masseelektrode 5 radial von der Gehäuse-Innenseite 23 in die Bohrung entlang der Längsachse des Gehäuses 2 hineinragen. Die mindestens eine Masseelektrode 5 und die Mittelelektrode 4 bilden zusammen einen Zündspalt aus. Die Bohrungen 52 erstrecken sich von der Außenseite 24 durch die Gehäusewand bis zur Innenseite 23 des Gehäuses 2. Grundsätzlich kann die Vorkammer-Zündkerze 1 auch zwei oder mehr als zwei Masseelektrode 5 aufweisen.

Das Gehäuse 2 weist einen Schaft auf. An diesem Schaft sind ein Mehrkant 21, ein Schrumpfeinstich und ein Gewinde 22 ausgebildet. Das Gewinde 22 dient zum Einschrauben der Vorkammer-Zündkerze 1 in einen Motor.

Die Bohrungen 52 in der Gehäusewand sind im Bereich des Gewindes 22 ausgebildet. Dabei kann die Bohrung 52 für die mindestens eine Masseelektrode 5 und damit auch die mindestens eine Masseelektrode 5 auf jeder beliebigen Höhe im Bereich des Gewindes 22 angeordnet sein. Je nach der Position der mindestens einen Masseelektrode 5 im Bereich des Gewindes 22 ragt entsprechend die Mittelelektrode 4 und mit ihr auch der Isolatorfuß 31 mehr oder weniger weit in die Vorkammer 81 hinein. Je nach gewünschten Verwendungszweck der Vorkammer-Zündkerze 1 kann die Position der Bohrungen im Bereich des Gewindes 22 und der mindestens einen Masseelektrode 5 auf der Innenseite 23 des Gehäuses 2 gewählt werden.

Am Gehäuse 2 ist auf dessen brennraumseitigen Stirnfläche eine Vorkammerkappe 80 angeordnet. Das Gehäuse 2 und die Vorkammerkappe 80 bilden zusammen eine Vorkammer 81 mit einem Vorkammervolumen. Die Vorkammer 81 erstreckt sich von der Vorkammerkappe 80 bis ins Gehäuse 2 hinein und innerhalb des Gehäuses 2 bis zum Gehäuse-Sitz 25, auf dem der Isolator 3 mit seiner Schulter 35 aufliegt. Der Zwischenraum zwischen Gehäuse 2 und Isolator 3 ist an dieser Stelle mittels einer Innendichtung 10 gasdicht abgedichtet. Die Vorkammer 81 und ihr Volumen lassen sich in eine vordere Vorkammer 81a und eine hintere Vorkammer 81b unterteilen. Der Grenze zwischen der vorderen Vorkammer 81a und hinteren Vorkammer 81b wird durch die Position der Masseelektrode bestimmt, d.h. die vordere Vorkammer 81a erstreckt sich von der Vorkammerkappe 80 bis zu einer Ebene, die auf Höhe der Masseelektrode 5 senkrecht zur der Längsachse Y-Y der Vorkammer-Zündkerze 1 verläuft. Entsprechend erstreckt sich die hintere Vorkammer 81b von dieser Ebene bis zum Gehäuse-Sitz 25, auf dem der Isolator 3 und die Innendichtung 10 aufliegen. Die Ebene wird entlang der Längsachse der Masseelektroden 5 gelegt.

Bei den hier gezeigten Beispielen weist die Durchgangsöffnungen 85 auf der Innenseite 83 der Vorkammerkappenwand 82 einen größeren Durchmesser d2 als auf der Außenseite 84 der Vorkammerkappenwand 82 auf.

## Patentansprüche

1. Vorkammerkappe (80) für eine Vorkammer-Zündkerze (1), aufweisend eine Wand (82) mit einer Innenseite (83) und einer Außenseite (84), wobei die Wand (82) der Vorkammerkappe (80) mindestens eine Durchgangsöffnung (85) aufweist, die sich von der Innenseite (83) der Wand (82) bis zur Außenseite (84) der Wand (82) erstreckt, und wobei durch die mindestens eine Durchgangsöffnung (85) ein Kraftstoff-Gemisch in eine Vorkammer (81) einströmen und eine Flamme aus der Vorkammer (81) ausströmen kann, wobei die der Wand (82) der Vorkammerkappe (80) einen Teil der Begrenzung der Vorkammer (81) bilden kann, wobei die Vorkammerkappe (80) mindestens zwei Durchgangsöffnungen (85) aufweist, deren Durchmesser (d) einen konischen Verlauf haben, **dadurch gekennzeichnet, dass** alle Durchgangsöffnungen (85) der Vorkammerkappe auf der Innenseite (83) der Vorkammerkappenwand (82) einen größeren Durchmesser (d2) als auf der Außenseite (84) der Vorkammerkappenwand (82) haben.

2. Vorkammerkappe (80) nach Anspruch 1, **dadurch gekennzeichnet, dass** die mindestens zwei Durchgangsöffnungen (85) symmetrisch in Bezug auf eine Längsachse X-X der Vorkammerkappe (80) angeordnet sind.

3. Vorkammerkappe (80) nach Anspruch 1 oder 2, **dadurch gekennzeichnet, dass** die Vorkammerkappe (80) maximal 9 Durchgangsöffnungen (85) aufweist, die jeweils einen Durchmesser (d) mit einem konischen Verlauf haben, wobei insbesondere bei einer ungeraden Anzahl von Durchgangsöffnungen eine Durchgangsöffnung (85) entlang der Längsachse X-X der Vorkammerkappe (80) in der Wand (82) angeordnet ist und die restlichen Durchgangsöffnungen (85) symmetrisch in Bezug auf die Längsachse X-X der Vorkammerkappe (80) in der Wand (82) angeordnet sind.

4. Vorkammerkappe (80) nach einem der vorherigen Ansprüchen, **dadurch gekennzeichnet, dass** die Durchgangsöffnungen (85) einen Durchmesser von mindestens 0,5 mm und maximal 2,0 mm haben, wobei insbesondere der minimale Durchmesser (d1) und der maximale Durchmesser (d2) einer Durchgangsöffnung (85) innerhalb des Bereichs von 0,5 bis 2,0 mm liegen.

5. Vorkammerkappe (80) nach einem der Ansprüche 2 bis 4, **dadurch gekennzeichnet, dass** zwei Durchgangsöffnungen (85), die bezüglich der Längsachse X-X der Vorkammerkappe (80) symmetrisch zu einander angeordnet sind, einen Winkel 2α von mindestens 60° und maximal 140° zwischen sich einschließen, wobei der Winkel 2α durch die Längsachsen Z-Z der jeweiligen Durchgangsöffnung (85) begrenzt wird.

6. Vorkammerkappe (80) nach einem der vorherigen Ansprüchen, **dadurch gekennzeichnet, dass** die mindestens zwei Durchgangsöffnungen (85) in der Wand (82) radial in Bezug auf die Längsachse X-X der Vorkammerkappe (80) angeordnet ist, oder dass die mindestens zwei Durchgangsöffnungen (85) tangential in der Wand (82) in Bezug auf die Längsachse X-X der Vorkammerkappe angeordnet ist.

7. Vorkammer-Zündkerze (1), aufweisend
• Eine Längsachse Y-Y, die sich vom brennraumseitigen Ende bis zum brennraumabgewandten Ende der Vorkammer-Zündkerze erstreckt,
• ein Gehäuse (2) mit einer Bohrung entlang der Längsachse Y-Y,
• ein innerhalb des Gehäuses (2) angeordneten Isolator (3)
• eine innerhalb des Isolators (3) angeordnete Mittelelektrode (4),
• mindestens eine Masseelektrode (5), wobei die mindestens eine Masseelektrode (5) und die Mittelelektrode (4) so angeordnet sind, dass ein Zündspalt sich ausbildet, und
• eine Vorkammerkappe (80) nach einem der Ansprüche 1 bis 6, wobei die Vorkammerkappe (80) am brennraumseitigen Ende des Gehäuses am Gehäuse (2) angeordnet ist, und die zusammen mit dem Gehäuse (2) eine Vorkammer (81) ausbildet.

8. Verfahren zur Herstellung einer Vorkammerkappe (80) nach einem der Ansprüche 1 bis 6, **dadurch gekennzeichnet, dass** die mindestens zwei Durchgangsöffnungen (85) mit dem konischen verlaufenden Durchmesser mittels Laserstrahl oder Erodieren gebohrt werden.

9. Verfahren nach Anspruch 8, **dadurch gekennzeichnet, dass** der Laserstrahl oder eine zum Erodieren verwendete Elektrode so geführt werden, dass eine Seite jeder Durchgangsöffnung mit der Längsachse Z-Z der Durchgangsöffnung einen Winkel β von nicht weniger als 2° und nicht mehr als 8° einschließt.

## Claims

1. Prechamber cap (80) for a prechamber spark plug (1), having a wall (82) with an inner side (83) and with an outer side (84), wherein the wall (82) of the prechamber cap (80) has at least one passage opening (85), which extends from the inner side (83) of the wall (82) to the outer side (84) of the wall (82), and wherein a fuel mixture can flow into a prechamber (81), and a flame can pass out of the prechamber (81), through the at least one passage opening (85), wherein the wall (82) of the prechamber cap (80) can form a part of the delimitation of the prechamber (81), wherein the prechamber cap (80) has at least two passage openings (85), whose diameters (d) have a conical profile, **characterized in that** all the passage openings (85) of the prechamber cap have a larger diameter (d2) on the inner side (83) of the prechamber cap wall (82) than on the outer side (84) of the prechamber cap wall (82).

2. Prechamber cap (80) according to Claim 1, **characterized in that** the at least two passage openings (85) are arranged symmetrically in relation to a longitudinal axis X-X of the prechamber cap (80) .

3. Prechamber cap (80) according to Claim 1 or 2, **characterized in that** the prechamber cap (80) has at most 9 passage openings (85), which each have a diameter (d) with a conical profile, wherein, in particular, in the case of an odd number of passage openings, one passage opening (85) is arranged in the wall (82) along the longitudinal axis X-X of the prechamber cap (80) and the rest of the passage openings (85) are arranged in the wall (82) symmetrically in relation to the longitudinal axis X-X of the prechamber cap (80).

4. Prechamber cap (80) according to one of the preceding claims, **characterized in that** the passage openings (85) have a diameter of at least 0.5 mm and at most 2.0 mm, wherein, in particular, the minimum diameter (d1) and the maximum diameter (d2) of a passage opening (85) lie within the range of 0.5 to 2.0 mm.

5. Prechamber cap (80) according to one of Claims 2 to 4, **characterized in that** two passage openings (85) which are arranged symmetrically with respect to one another in relation to the longitudinal axis X-X of the prechamber cap (80) include between them an angle 2α of at least 60° and at most 140°, wherein the angle 2α is bounded by the longitudinal axes Z-Z of the respective passage openings (85).

6. Prechamber cap (80) according to one of the preceding claims, **characterized in that** the at least two passage openings (85) are arranged radially in the wall (82) in relation to the longitudinal axis X-X of the prechamber cap (80), or **in that** the at least two passage openings (85) are arranged tangentially in the wall (82) in relation to the longitudinal axis X-X of the prechamber cap.

7. Prechamber spark plug (1), having
• a longitudinal axis Y-Y which extends from the combustion-chamber-side end of the prechamber spark plug to that end of the latter which is averted from the combustion chamber,
• a housing (2) with a bore along the longitudinal axis Y-Y,
• an insulator (3) which is arranged in the housing (2),
• a centre electrode (4) which is arranged within the insulator (3),
• at least one earth electrode (5), wherein the at least one earth electrode (5) and the centre electrode (4) are arranged in such a way that a spark gap is formed, and
• a prechamber cap (80) according to one of Claims 1 to 6, wherein the prechamber cap (80) is arranged on the housing (2) at the combustion-chamber-side end of the housing and forms together with the housing (2) a prechamber (81).

8. Method for producing a prechamber cap (80) according to one of Claims 1 to 6, **characterized in that** the at least two passage openings (85) with the conically extending diameter are drilled by means of a laser beam or erosion.

9. Method according to Claim 8, **characterized in that** the laser beam or an electrode used for erosion are guided in such a way that a side of each passage opening includes an angle β of no less than 2° and no more than 8° with the longitudinal axis Z-Z of the passage opening.

## Revendications

1. Capuchon de chambre de précombustion (80) pour une bougie d'allumage de chambre de précombustion (1), présentant une paroi (82) ayant un côté intérieur (83) et un côté extérieur (84), la paroi (82) du capuchon de chambre de précombustion (80) présentant au moins une ouverture de passage (85), qui s'étend depuis le côté intérieur (83) de la paroi (82) jusqu'au côté extérieur (84) de la paroi (82), et un mélange de carburant pouvant affluer dans une chambre de précombustion (81) et une flamme pouvant sortir de la chambre de précombustion (81) à travers l'au moins une ouverture de passage (85), la paroi (82) du capuchon de chambre de précombustion (80) pouvant former une partie de la délimitation de la chambre de précombustion (81), le capuchon de chambre de précombustion (80) présentant au moins deux ouvertures de passage (85), dont les diamètres (d) ont une allure conique, **caractérisé en ce que** toutes les ouvertures de passage (85) du capuchon de chambre de précombustion ont un diamètre (d2) plus grand sur le côté intérieur (83) de la paroi de capuchon de chambre de précombustion (82) que sur le côté extérieur (84) de la paroi de capuchon de chambre de précombustion (82).

2. Capuchon de chambre de précombustion (80) selon la revendication 1, **caractérisé en ce que** les au moins deux ouvertures de passage (85) sont agencées symétriquement par rapport à un axe longitudinal X-X du capuchon de chambre de précombustion (80).

3. Capuchon de chambre de précombustion (80) selon la revendication 1 ou 2, **caractérisé en ce que** le capuchon de chambre de précombustion (80) présente au plus 9 ouvertures de passage (85), qui ont chacune un diamètre (d) ayant une allure conique, notamment pour un nombre impair d'ouvertures de passage, une ouverture de passage (85) étant agencée dans la paroi (82) le long de l'axe longitudinal X-X du capuchon de chambre de précombustion (80) et les ouvertures de passage restantes (85) étant agencées dans la paroi (82) symétriquement par rapport à l'axe longitudinal X-X du capuchon de chambre de précombustion (80).

4. Capuchon de chambre de précombustion (80) selon l'une quelconque des revendications précédentes, **caractérisé en ce que** les ouvertures de passage (85) ont un diamètre d'au moins 0,5 mm et d'au plus 2,0 mm, le diamètre minimal (d1) et le diamètre maximal (d2) d'une ouverture de passage (85) se situant notamment dans la plage allant de 0,5 à 2,0 mm.

5. Capuchon de chambre de précombustion (80) selon l'une quelconque des revendications 2 à 4, **caractérisé en ce que** deux ouvertures de passage (85), qui sont agencées symétriquement l'une par rapport à l'autre par rapport à l'axe longitudinal X-X du capuchon de chambre de précombustion (80), forment entre elles un angle 2α d'au moins 60° et d'au plus 140°, l'angle 2α étant délimité par les axes longitudinaux Z-Z de l'ouverture de passage (85) respective.

6. Capuchon de chambre de précombustion (80) selon l'une quelconque des revendications précédentes, **caractérisé en ce que** les au moins deux ouvertures de passage (85) sont agencées dans la paroi (82) radialement par rapport à l'axe longitudinal X-X du capuchon de chambre de précombustion (80), ou **en ce que** les au moins deux ouvertures de passage (85) sont agencées tangentiellement dans la paroi (82) par rapport à l'axe longitudinal X-X du capuchon de chambre de précombustion

7. Bougie d'allumage de chambre de précombustion (1), présentant :
- un axe longitudinal Y-Y, qui s'étend depuis l'extrémité côté chambre de combustion jusqu'à l'extrémité détournée de la chambre de combustion de la bougie d'allumage de chambre de précombustion,
- un boîtier (2) ayant un alésage le long de l'axe longitudinal Y-Y,
- un isolateur (3) agencé à l'intérieur du boîtier (2),
- une électrode centrale (4) agencée à l'intérieur de l'isolateur (3),
- au moins une électrode de masse (5), l'au moins une électrode de masse (5) et l'électrode centrale (4) étant agencées de telle sorte qu'une fente d'allumage se forme, et
- un capuchon de chambre de précombustion (80) selon l'une quelconque des revendications 1 à 6, le capuchon de chambre de précombustion (80) étant agencé sur le boîtier (2) à l'extrémité côté chambre de combustion du boîtier, et qui forme conjointement avec le boîtier (2) une chambre de précombustion (81).

8. Procédé de fabrication d'un capuchon de chambre de précombustion (80) selon l'une quelconque des revendications 1 à 6, **caractérisé en ce que** les au moins deux ouvertures de passage (85) ayant le diamètre d'allure conique sont percées par faisceau laser ou par érosion.

9. Procédé selon la revendication 8, **caractérisé en ce que** le faisceau laser ou une électrode utilisée pour l'érosion sont guidés de telle sorte qu'un côté de chaque ouverture de passage forme un angle β non inférieur à 2° et non supérieur à 8° avec l'axe longitudinal Z-Z de l'ouverture de passage.
